# EUROPÄISCHE PATENTSCHRIFT

(11) **EP 0 601 174 B1**
(45) Veröffentlichungstag und Bekanntmachung des Hinweises auf die Patenterteilung: **19.05.1999**
(21) Anmeldenummer: 93915716.0
(22) Anmeldetag: 25.06.1993
(51) Int. Cl.: G11B 33/04

(54) **SCHUTZBEHÄLTER FÜR CD-PLATTEN**
PROTECTIVE CONTAINER FOR CDs
BOITIER PROTECTEUR POUR DISQUES AUDIONUMERIQUES

(30) Priorität: 26.06.1992 DE 4221127
(43) Veröffentlichungstag der Anmeldung: 15.06.1994
(73) Patentinhaber: TIMPE, Rainer, 30982 Pattensen (DE)
(72) Erfinder: TIMPE, Rainer, 30982 Pattensen (DE)
(74) Vertreter: Hagemann, Heinrich, Dr.rer.nat., Dipl.-Chem.
(86) Internationale Anmeldenummer: EP9301636
(87) Internationale Veröffentlichungsnummer: WO9400845

(56) Entgegenhaltungen:
- DE-U- 8 521 981
- DE-U- 9 012 249
- US-A- 3 860 248
- US-A- 4 687 101
- US-A- 4 964 510

## Beschreibung

Seit einigen Jahren ersetzen die CD-Platten immer mehr die alten Plattensysteme. CD-Platten sind derzeit noch vergleichsweise teuer und müssen demzufolge schonend behandelt werden. Zu dieser schonenden Behandlung zählt es auch, daß sie in Hüllen gelagert werden und beim Einlegen in diese Hüllen und bei der Entnahme keine Beschädigung erfahren sollen. Die Beschädigung bezieht sich auf die bespielte Seite, während die informative Seite hierbei keine Beeinträchtigung erfährt. Eine Beschädigung auf der bespielten Seite, wenn sich auch minimal ist, kann zu einer erheblichen Beeinträchtigung der Tonwiedergabe führen. So kann das gesamte Plattensystem bei einer geringfügigen Beschädigung bereits so gestört sein, daß die Platte nicht abgespielt wird. Diese Probleme treten insbesondere dann auf, wenn beispielsweise in Diskotheken ein laufender Plattenwechsel vorgenommen werden muß. Dabei dürfen die Platten, die aus den Schutzhüllen genommen worden sind, unter keinen Umständen auf die bespielte Seite gelegt werden, da hierbei bereits die angesprochenen Beschädigungen eintreten können. Dieses Problem trifft nicht nur für Diskotheken, sondern ebenfalls für jede Rundfunkstation zu. Die mit einer CD-Platte angesprochenen Probleme erstrecken sich generell auf als Informationsträger dienende CD-Platten, wie sie im Computerbereich als Bildplatte usw. zu finden sind.

Es hat nicht an Versuchen gefehlt, die angesprochenen Probleme zu beheben. Zufriedenstellende Lösungen wurden bis heute nicht gefunden. Es existiert beispielsweise ein System, bei dem die CD-Platte in ihrer inneren Öffnung auf einen Klemmaufnahmeverschluß aufgesetzt wird. Um die Platte hiervon zu lösen, bedarf es des Aufbringens einer Spannkraft, wodurch bereits die Möglichkeit besteht, daß durch die auf die CD-Platte einwirkende Spannung eine Beschädigung eintritt. Eine besondere Gefahr einer Beschädigung besteht beim Handhaben der CD-Platte, wobei beim Untergreifen bereits unmittelbar eine Beschädigung auftreten kann, die eine Weiterverwendung ausschließt. Da es für die angesprochenen Anwendungsbereiche wichtig ist, durch das Label Kenntnis über den Inhalt der Platte zu erhalten, bedarf es oft eines Drehens dieser Platte. Bereits hierdurch kann die empfindliche Rückseite Beschädigungen mit den angesprochenen Folgen erfahren. Darüber hinaus bestehen bei den bisherigen Hüllen Herstellungsprobleme, da sie aus mindestens zwei Teilen bestehen, meistens jedoch aus drei Teilen. Dies bedeutet sowohl kostenmäßig als auch in technischer Hinsicht bei der Herstellung einen Mehraufwand.

In der Offenlegungsschrift DE 36 38 912 A1 wird ein bekanntes Magazin für plattenförmige Aufzeichnungsträger, wie z.B. CD-Platten, beschrieben, das für den Einbau in Fahrzeuge vorgesehen ist und eine Haltevorrichtung für die CD-Platten hat, um sie gegen Herausfallen aufgrund von Erschütterungen zu sichern. Aus dieser Druckschrift sind die Merkmale des Oberbegriffs des Anspruchs 1 bekannt. In dem Gebrauchsmuster DE 90 12 249.6 U1 wird eine bekannte einteilige Compact Disc Verpackung beschrieben, bei der die CD elastisch in der Verpackung gegen Herausfallen mittels eines Klemmbandes gehalten ist, das eine Rille aufweist, in der die CD punktförmig festgehalten ist. Beim Einführen der CD in das Magazin kann es zu einer Berührung der bespielten Oberfläche der CD mit dem Magazingehäuse kommen und damit zu einer Beschädigung der CD.

Aus der US 4,964,510 ist ein Plattengehäuse zum Aufnehmen von Compact Discs oder ähnlichen plattenförmigen Objekten bekannt. Das bekannte Gehäuse besteht im wesentlichen aus zwei parallel zueinander verlaufenden Seitenwänden, zwischen denen ein Aufnahmeraum zur Unterbringung der CD ausgebildet ist. Die CD wird in einen offenliegenden Aufnahmeschlitz eingeführt, um sie im Gehäuse unterbringen zu können. Zwischen den beiden Seitenwänden ist eine Führungsspur mit vertikalen Wänden vorgesehen, zwischen denen die CD in einem Randbereich gelagert wird. Im Bereich des Aufnahmeschlitzes ist die Führungsspur angeschrägt, um das Einführen der CD in die Führungsspur zu erleichtern.

Beim Einführen der CD in das bekannte Gehäuse kommt die CD zumindest im Randbereich ihrer bespielten Oberfläche mit dem Vertikalwänden der Führungsspur in Berührung, wobei die bespielte Oberfläche der CD z.B. durch Kratzer beeinträchtigt werden kann. Aber auch beim Einführen der CD in den Aufnahmeschlitz kann bei dem bekannten Gehäuse eine Beschädigung der bespielten Oberfläche der CD entstehen, da ein relativ großes Kreisflächensegment der CD ungeführt im Bereich des Aufnahmeschlitzes gegeben ist, bevor die CD in die Führungsspur eingreift. Im Bereich dieses ungeführten Kreissegments der CD ist eine Berührung der bespielten Oberfläche der CD mit den Kanten der Seitenwände des Gehäuses möglich, wodurch die bespielte Oberfläche der CD beim Einbringen der CD in das Gehäuse beschädigt werden kann.

Aufgabe der vorliegenden Erfindung ist es einen aufwandsparenden Schutzbehälter für die CD-Platten zu schaffen, mit dem eine Beschädigung der CD-Platte beim Einbringen der CD-Platte in den Schutzbehälter, beim Lagern der CD im Schutzbehälter und auch beim Herausnehmen der CD aus dem Schutzbehälter vermieden wird.

Diese Aufgabe wird durch den Schutzbehälter nach Anspruch 1 gelöst.

Der erfindungsgemäße Schutzbehälter für eine CD-Platte oder für einen ähnlichen plattenförmigen Gegenstand hat an einer Stirnseite einen Einschubschlitz zum Einschieben der CD-Platte, und ferner eine Grundeinheit bzw. eine Grundplatte und eine Deckeinheit bzw. eine Deckplatte, die fest miteinander verbunden sind und zwischen denen durch eine Ausnehmung ein u-förmiger Aufnahmeraum zur Aufnahme der CD-Platte mit randseitigen Führungsschrägen zur beschädigungsfreien Halterung und Einschubführung der CD-Platte ausgebildet ist. Die Führungsschrägen sind als abgeschrägte Ränder ausgebildet, die sich vcm Boden der Ausnehmung bis zur Oberfläche der Grundplatte erstrecken, wobei die Grundplatte am offenen Rand der u-förmigen Ausnehmung eine kreissegmentförmige Aussparung aufweist, deren Rand einen zum Boden der Ausnehmung hin abgeschrägten bzw. angeschrägten Randbereich bzw. eine Schräge aufweist. Die abgeschrägten Ränder bzw. Kanten der Ausnehmung bzw. der Ausnehmungen bilden eine Führungsbahn für den Rand bzw. für eine Kante oder für die Kanten des Randes eier CD-Platte.

Der erfindungsgemäße Schutzbehälter ist demnach derart ausgelegt, daß die CD beim Einschieben in den Schutzbehälter, bei der Lagerung im Schutzbehälter und beim Herausnehmen aus dem Schutzbehälter nur mit ihrem Rand bzw. mit den Kanten ihres Randes in Berührung mit dem Schutzbehälter kommen kann, wodurch Beschädigungen der bespielten Oberfläche der CD vorteilhafterweise vermieden werden.

Dieser Vorteil wird im wesentlichen durch die schrägen, führenden Ränder im Inneren des CD-Gehäuses und durch die kreissegmentartige Aussparung bzw. Ausnehmung am offenen Rand der u-förmigen Ausnehmung erreicht. Die kreissegmentartige, am Rand angeschrägte Aussparung verhindert insbesondere, daß beim Einführen der CD in die Schutzhülle die Oberfläche der CD beschädigt wird, bevor die CD durch die schrägen Führungsränder geführt wird.

Bei einem derartigen Schutzbehälter wird nur der Rand der CD-Platte bein Einlegen und Herausnehmen aus dem Behälter berührt, wobei sich die bespielte Fläche der CD-Platte aufgrund der schrägen Ränder immer im Abstand vom Boden der Grundplatte befindet.

Vorteilhafte Ausgestaltungen der Erfindung ergeben sich aus den Unteransprüchen.

So ist es gemäß einer Weiterbildung der Erfindung vorgesehen, daß die Deckplatte eine mittig zu der U-förmigen Ausnehmung der Grundplatte entsprechend angeordnete, jedoch wesentlich kleinere U-förmige Aussparung aufweist. Diese Aussparung erleichtert das Einlegen und Herausnehmen der CD-Platte.

Gemäß einer weiteren vorteilhaften Ausgestaltung der Erfindung ist vorgesehen, daß die Deckplatte ebenfalls eine allgemein U-förmige, der U-förmigen Ausnehmung der Grundplatte entsprechende Ausnehmung mit abgeschrägten Rändern, die sich von dem Boden der Ausnehmung bis zur Oberfläche der Deckplatte, die auf der Oberfläche der Grundplatte angeordnet ist, erstrecken, aufweist. Hierdurch wird vermieden, daß, wenn die CD-Platte versehentlich umgekehrt in den Schutzbehälter eingelegt wird, die bespielte Seite beschädigt wird, da in jedem Fall ein Abstand der bespielten Seite entweder von der Grundplatte oder der Deckplatte gewährleistet ist.

Gemäß einer weiteren vorteilhaften Ausgestaltung der Erfindung bilden die abgeschrägten Ränder der Ausnehmung bzw. der Ausnehmungen eine Führungsbahn für den Rand einer CD-Platte. Hierdurch wird der Rand der CD-Platte bein Einlegen automatisch angehoben, so daß sich die bespielte Seite immer im Abstand von dem Boden der Grundplatte bzw. der Deckplatte befindet.

Eine weitere vorteilhafte Ausgestaltung der Erfindung sieht vor, daß die Grundplatte aus einem undurchsichtigen und die Deckplatte aus einem durchsichtigen Material besteht. Hierdurch wird eine Beschädigung der bespielten Seite, die sich im eingelegten Zustand in Abstand vom Boden der Grundplatte befindet, durch einwirkende Strahlung, z.B. Sonneneinstrahlung, vermieden.

Als vorteilhaftes Material für den Schutzbehälter ist erfindungsgemäß Kunststoff vorgesehen. Bei der Verwendung von Kunststoffmaterial, z.B. eines thermoplastischen Kunststoffes, bedarf es zur Herstellung lediglich eines einzigen Werkzeugs bzw. einer einzigen Form, wobei der Kunststoff lediglich geschmolzen in die Form gegossen werden muß. Zur Herstellung des Schutzbehälters werden erfindungsgemäß die Grundplatte und die Deckplatte an ihren einander zugewandten Oberflächen miteinander verklebt oder verschweißt.

Zur Ausbildung der obengenannten Führungsbahnen ist es zweckmäßig, daß der Neigungswinkel der abgeschrägten Ränder etwa 45° beträgt.

Die abgeschrägten Ränder können sich über den gesamten Umfang der U-förmigen Ausnehmung bzw. Ausnehmungen erstrecken. Dies führt zu einer sicheren Aufnahme bzw. Führung der CD-Platte beim Einlegen oder Entnehmen. Es ist ebenfalls denkbar, daß sich die abgeschrägten Ränder nur längs der Schenkel oder nur über Abschnitte der Schenkel und des Stegs der U-förmigen Ausnehmung bzw. Ausnehmungen erstrecken.

Zweckmäßigerweise entspricht der Radius des Stegs der U-förmigen Ausnehmung bzw. Ausnehmungen etwa dem Radius der CD-Platte.

Durch die Ausbildung der Ränder wird eine eingelegte CD-Platte in ihrer Endlage stabilisiert, wodurch ein Wackeln beim Transport oder dergleichen ausgeschlossen wird.

Die derzeitigen CD-Musikplatten sind in ihrer Dimensionierung einheitlich. Ihr Durchmesser beträgt derzeit 12 cm. Der Durchmesser von Bild-CD-Platten beträgt 30 cm. Im Hinblick auf den Ausschluß von Staubeinfall kann zusätzlich eine einfache Kunststoffhülle den Schutzbehälter abschließen. Die kreissegmentförmige Aussparung der U-förmigen Ausnehmung am vorderen Rand der Grundplatte oder der Deckplatte wird hierbei mit einer Kunststoffolie verschlossen. Die angesprochene kleinere U-förmige Ausnehmung in der Deckplatte des Schutzbehälters weist vorzugsweise eine Breite von etwa einem Viertel des Durchmessers der CD-Platte auf. Sie dient zum leichteren Einführen aufgrund einer vorgegebenen Zentrierung.

Der erfindungsgemäße Schutzbehälter ermöglicht eine sehr schnelle Handhabung der CD-Platten, eine unmittelbare Information über den Inhalt der Platte und schließt jegliche Beschädigung beim Einlegen und Herausnehmen der CD-Platte aus.

Ausführungsbeispiele der Erfindung sind in der Zeichnung dargestellt und werden im folgenden näher beschrieben. Es zeigen:
- Fig. 1: eine Aufsicht auf den Schutzbehälter;
- Fig. 2: eine Stirnansicht des Schutzbehälters gemäß der Linie II-II in Fig. 1;
- Fig. 3: eine Aufsicht auf den Schutzbehälter gemäß einer weiteren Ausführungsform der Erfindung; und
- Fig. 4: eine Stirnansicht des Schutzbehälters gemäß Fig. 3 längs der Linie IV-IV in Fig. 3.

Der in den Figuren dargestellte Schutzbehälter für CD-Platten umfaßt eine Grundplatte 10 mit einer allgemein U-förmigen Ausnehmung 12 mit abgeschrägten Rändern 14, 16, die sich von dem Boden 18 der Ausnehmung 12 bis zur Oberfläche der Grundplatte 10 erstrecken. Die Grundplatte 10 ist am offenen Rand 22 der U-förmigen Ausnehmung 12 kreissegmentförmig ausgespart. Der Radius der kreissegmentförmigen Aussparung 44 entspricht vorzugsweise dem Radius einer CD-Platte, um sicherzustellen, daß nur der Rand der CD-Platte berührt wird. Dabei weist die Aussparung 44 ebenfalls einen zum Boden 18 der Ausnehmung 12 hin abgeschrägten Rand 24 auf.

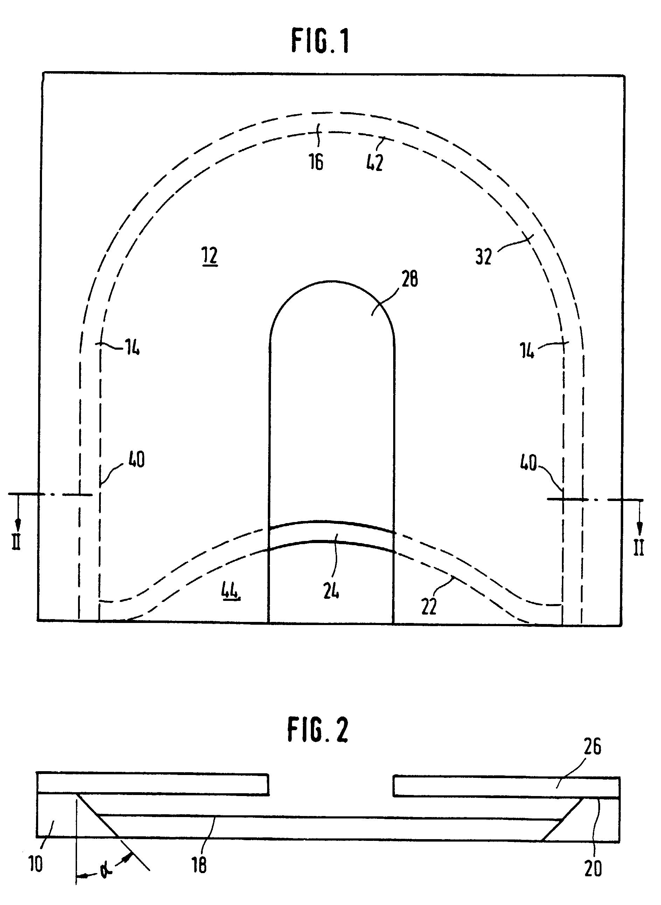

Auf der Oberfläche 20 der Grundplatte 10 ist eine Deckplatte 26 angeordnet. Diese Deckplatte 26 ist gemäß der in Fig. 1 und 2 dargestellten Ausführungsform mit einer mittig zu der U-förmigen Ausnehmung 12 der Grundplatte entsprechend angeordneten, jedoch wesentlich kleineren U-förmigen Aussparung 28 versehen. Diese Aussparung 28 hat eine Breite von etwa einem Viertel des Durchmessers der CD-Platte und dient zum leichteren Einlegen und Herausnehmen der CD-Platte, wobei gleichzeitig eine Zentrierung der CD-Platte gewährleistet ist.

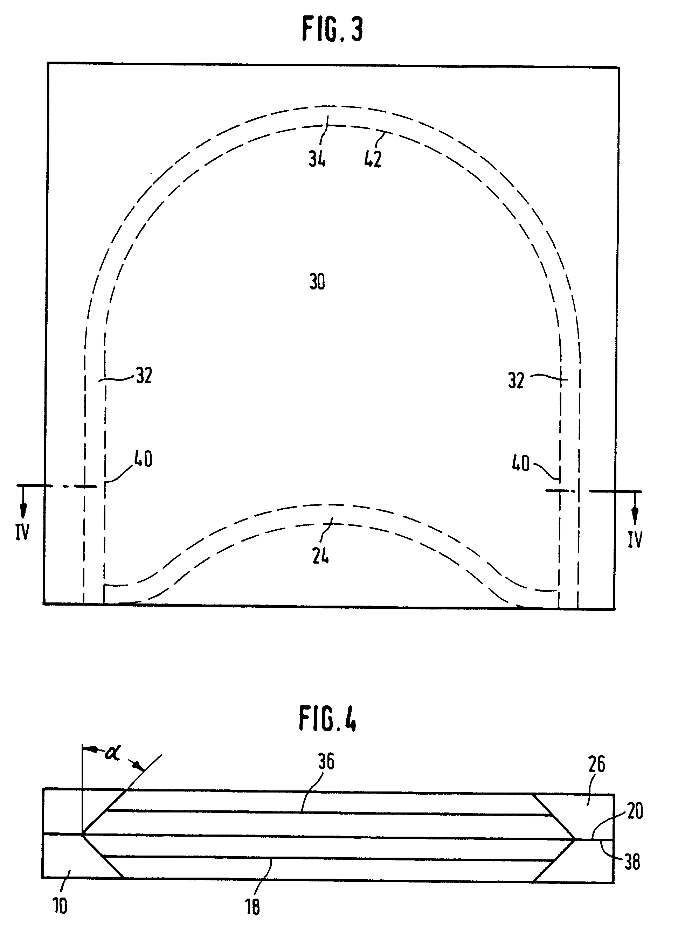

Gemäß einer weiteren Ausführungsform (siehe Fig. 3 und 4) weist die Deckplatte 26 ebenfalls eine allgemein U-förmige, der U-förmigen Ausnehmung 12 der Grundplatte 10 entsprechende Ausnehmung 30 mit abgeschrägten Rändern 32, 34 auf, die sich von dem Boden 36 der Ausnehmung 30 bis zur Oberfläche 38 der Deckplatte 26, die auf der Oberfläche 20 der Grundplatte 10 angeordnet ist, erstrecken. Die abgeschrägten Ränder 14, 16 der Ausnehmung 12 der ersten Ausführungsform (siehe Fig. 1 und 2) bzw. die Ränder 32, 34. der Ausnehmung 30 gemäß der zweiten Ausführungsform (siehe Fig. 3 und 4) bilden eine Führungsbahn für den Rand einer CD-Platte.

Die Grundplatte 10 ist vorzugsweise bei der Ausführungsform gemäß Fig. 1 und 2 aus einem undurchsichtigen und die Deckplatte 26 aus einem durchsichtigen Material. Hierdurch wird einerseits eine Beschädigung der CD-Platte durch Strahlung vermieden, wobei andererseits eine gute Lesbarkeit des Labels gewährleistet ist. Bei der Ausführungsform gemäß Fig. 3 und 4, bei der sowohl in der Grundplatte 10 als auch in der Deckplatte 26 abgeschrägte Ränder 14, 16, 32, 34 vorgesehen sind, sind zweckmäßigerweise sowohl die Grundplatte als auch die Deckplatte aus einem durchsichtigen Material, z.B. Kunststoff, hergestellt. Hierbei werden zwei identische Platten, z.B. mittels Spritzgießen, hergestellt, die an ihren einander zugewandten Oberflächen 20, 38 miteinander verklebt oder verschweißt sind.

Wie aus Fig. 2 und 4 ersichtlich, beträgt der Neigungswinkel α der abgeschrägten Ränder 14, 16, 32, 34 etwa 45°. Bei den dargestellten Ausführungsbeispielen erstrecken sich die abgeschrägten Ränder 14, 16, 32, 34 über den gesamten Umfang der U-förmigen Ausnehmung bzw. Ausnehmungen 12, 30. Es ist jedoch ebenfalls denkbar, daß sich die abgeschrägten Ränder 14, 16, 32, 34 nur längs der Schenkel 40 oder nur abschnittsweise über die Schenkel 40 und den Steg 42 der U-förmigen Ausnehmung erstrecken. Der Radius des Stegs 42 der U-förmigen Ausnehmung bzw. Ausnehmungen 12, 30 entspricht etwa dem Radius einer CD-Platte, d.h. 6 cm.

Mit dem beschriebenen Schutzbehälter wird eine sichere und einfache Lagerung für CD-Platten geschaffen, wobei ein einfaches Entnehmen und Einlegen der CD-Platte und eine gute Lesbarkeit des Labels gewährleistet sind.

Dieser Schutzbehälter ermöglicht eine absolut sichere Transportverpackung, die Möglichkeit seiner Bestückung mit einer CD-Platte sowie deren Entnahme daraus, ohne daß die Gefahr der Beschädigung besteht. Der Schutzbehälter läßt sich auch von oben bedienen, so daß die CD-Platten wie Karteikarten in einem Behälter gehandhabt, also geblättert werden können. Somit ergibt sich hiervon allein eine Ordnung wie in einem Archiv. Die Einhandbedienung ohne die Gefahr der CD-Beschädigung empfiehlt den Schutzbehälter besonders bei sehbehinderten Menschen. Er gibt aufgrund seiner einfachen Bedienung die Voraussetzung für eine maschinelle Bestückung mit CD-Platten, was bisher nicht möglich war.

## Patentansprüche

1. Schutzbehälter für einen runden, plattenförmigen Datenträger mit einem Einschubschlitz zum Einschieben des Datenträgers, welcher Schutzbehälter aufweist:
- eine Grundplatte, in der durch eine Vertiefung ein in Aufsicht auf die Grundplatte U-förmiger Raum zur im wesentlichen formschlüssigen Aufnahme des Datenträgers mit randseitigen Führungen zur beschädigungsfreien Halterung und Einschubführung des Datenträgers ausgebildet ist, und
- eine Deckplatte, die fest mit der Grundplatte verbunden ist und die Vertiefung abdeckt, **dadurch gekennzeichnet**, daß die Führungen als abgeschrägter Rand (14, 16) ausgebildet sind, die sich vom Boden (18) der Vertiefung (12) bis zur Oberfläche (20) der Grundplatte (10) erstrecken,
wobei die Grundplatte (10) am Einschubschlitz eine kreissegmentförmige Aussparung aufweist, die sich im wesentlichen über die gesamte Breite des Einschubschlitzes erstreckt und,
daß der so entstandene kreissegmentförmig ausgesparte Rand (22) zum Boden (18) der Vertiefung (12) hin eine Abschrägung (24) aufweist
und daß auf der Deckplatte (26) eine mittig zur Vertiefung (12) entsprechend angeordnete Aussparung (28) mit geringerer Breite zum mittigen Erfassen des Datenträgers vorgesehen ist und
die Deckplatte (26) sich, mit Ausnahme der Aussparung (28) mit geringerer Breite, über die Aussparung in der Grundplatte erstreckt.

2. Schutzbehälter nach Anspruch 1, dadurch gekennzeichnet, daß die Deckplatte (26) ebenfalls eine allgemein U-förmige, der U-förmigen Ausnehmung (12) der Grundplatte (10) entsprechende Ausnehmung (30) mit abgeschrägten Rändern (32, 34), die sich von dem Boden (36) der Ausnehmung (30) bis zur Oberfläche (38) der Deckplatte (26), die auf der Oberfläche (20) der Grundplatte (10) angeordnet ist, erstrecken, aufweist.

3. Schutzbehälter nach Anspruch 1 oder 2, dadurch gekennzeichnet, daß die abgeschrägten Ränder (14, 16, 32, 34) der Ausnehmung bzw. der Ausnehmungen (12, 30) eine Führungsbahn für den Rand einer CD-Platte bilden.

4. Schutzbehälter nach einem der Ansprüche 1 bis 3, dadurch gekennzeichnet, daß die Grundplatte (10) aus einem undurchsichtigen und die Deckplatte (26) aus einen durchsichtigen Material besteht.

5. Schutzbehälter nach einem der Ansprüche 1 bis 4, dadurch gekennzeichnet, daß die Grundplatte (10) und die Deckplatte (26) aus Kunststoff bestehen.

6. Schutzbehälter nach einem der Ansprüche 1 bis 5, dadurch gekennzeichnet, daß die Grundplatte (10) und die Deckplatte (26) an ihren aneinander zugewandten Oberflächen (20, 38) miteinander verklebt oder verschweißt sind.

7. Schutzbehälter nach einem der Ansprüche 1 bis 6, dadurch gekennzeichnet, daß der Neigungswinkel α der abgeschrägten Ränder (14, 16, 32, 34) etwa 45° beträgt.

8. Schutzbehälter nach einem der Ansprüche 1 bis 7, dadurch gekennzeichnet, daß sich die abgeschrägten Ränder (14, 16, 32, 34) über den gesamten Umfang der U-förmigen Ausnehmung bzw. Ausnehmungen (12, 30) erstrecken.

9. Schutzbehälter nach einem der Ansprüche 1 bis 8, dadurch gekennzeichnet, daß sich die abgeschrägten Ränder (14, 16, 32, 34) nur längs der Schenkel (40) der U-förmigen Ausnehmung bzw. Ausnehmungen (12, 30) erstrecken.

10. Schutzbehälter nach einem der Ansprüche 1 bis 9, dadurch gekennzeichnet, daß sich die abgeschrägten Ränder (14, 16, 32, 34) nur über Abschnitte der Schenkel (40) und des Stegs (42) der U-förmigen Ausnehmung bzw. Ausnehmungen (12, 30) erstrecken.

11. Schutzbehälter nach einem der Ansprüche 1 bis 10, dadurch gekennzeichnet, daß der Radius des Stegs (32) der U-förnigen Ausnehmung bzw. Ausnehmungen (12, 30) etwa dem Radius einer CD-Platte entspricht.

## Claims

1. Protective container for a round, plate-like data carrier with an insertion slot for the insertion of the data carrier, which protective container includes:
a base plate, in which a space, which is U-shaped in plan view of the base plate, is formed by a recess for the substantially form-locking reception of the data carrier with edge guides for damage-free retention and insertion guiding of the data carrier, and
a cover plate, which is firmly connected to the base plate and covers the recess,
characterised in that the guides are constructed as bevelled edges (14,16) which extend from the base (18) of the recess (12) to the surface (20) of the base plate (10), whereby the base plate (10) has a circular segmental cut-out at the insertion slot which extends substantially over the entire breadth of the insertion slot and
that the circular segmental cut away edge (22) thus produced has a bevel (24) towards the base (18) of the recess (12)
and that provided on the cover plate (26), centrally with respect to the recess (12), there is a correspondingly disposed cut-out (28) of smaller breadth for centrally gripping the data carrier and
the cover plate (26) extends, with the exception of the cut-out (28) of smaller breadth, over the cut-out in the base plate.

2. Protective container as claimed in claim 1, characterised in that the cover plate (26) also has a recess (30) of generally U-shape, which corresponds to the U-shaped recess (12) in the base plate (10), with bevelled edges (32,34), which extend from the base (36) of the recess (30) to the surface (20) of the base plate (10), which is disposed on the surface (20) of the base plate (10).

3. Protective container as claimed in claim 1 or 2, characterised in that the bevelled edges (14,16,32,34) of the recess or the recesses (12,30) constitute a guide path for the edge of a CD.

4. Protective container as claimed in one of claims 1 to 3, characterised in that the base plate (10) comprises an opaque material and the cover plate (26) comprises a transparent material.

5. Protective container as claimed in one of claims 1 to 4, characterised in that the base plate (10) and the cover plate (26) comprise plastics material.

6. Protective container as claimed in one of claims 1 to 5, characterised in that the base plate (10) and the cover plate (26) are connected together by adhesive or welding at their surfaces (20,38) which are directed towards one another.

7. Protective container as claimed in one of claims 1 to 6, characterised in that the angle of inclination α of the bevelled edges (14,16,32,34) is about 45°.

8. Protective container as claimed in one of claims 1 to 7, characterised in that the bevelled edges (14,16,32,34) extend over the entire periphery of the U-shaped recess or recesses (12,30).

9. Protective container as claimed in one of claims 1 to 8, characterised in that the bevelled edges (14,16,32,34) extend only along the limbs (40) of the U-shaped recess or recesses (12,30).

10. Protective container as claimed in one of claims 1 to 9, characterised in that the bevelled edges (14,16,32,34) extend only over sections of the limbs (40) and of the base (42) of the U-shaped recess or recesses (12,30).

11. Protective container as claimed in one of claims 1 to 10, characterised in that the radius of the base (32) of the U-shaped recess or recesses (12,30) corresponds approximately to the radius of a CD.

## Revendications

1. Boîtier de protection pour un support de données rond se présentant sous forme de disque avec une fente d'insertion pour introduire le support de données, lequel boîtier de protection présente :
une plaque de base, dans laquelle est formé, par le biais d'un creux, un espace en forme de U, si l'on considère une vue de dessus de la plaque de base, en vue du logement, essentiellement réalisé par complémentarité de formes, du support de données, et avec des guides périphériques pour le maintien et l'insertion, sans altération, du support de données, et
une plaque de recouvrement, qui est reliée de manière fixe à la plaque de base et qui recouvre le creux,
caractérisé en ce que les guides sont conçus sous la forme d'un bord chanfreiné (14, 16) et s'étendent du fond (18) du creux (12) jusqu'à la surface (20) de la plaque de base (10),
dans lequel la plaque de base (10) présente un évidement en forme de segment circulaire au niveau de la fente d'insertion, qui s'étend essentiellement sur toute la largeur de la fente d'insertion et
en ce que le bord (22) en forme de segment circulaire ainsi ménagé présente un chanfrein (24) orienté vers le fond (18) du creux (12),
et en ce que sur la plaque de recouvrement (26) est prévu un évidement (28) de largeur réduite disposé de manière à correspondre au milieu de l'excavation (12) afin de saisir au centre le support de données et
en ce que la plaque de recouvrement (26) s'étend, hormis l'évidement (28) de largeur réduite, sur l'évidement de la plaque de base.

2. Boîtier de protection selon la revendication 1, caractérisé en ce que la plaque de recouvrement (26) présente également un creux (30) globalement en forme de U, correspondant au creux en forme de U (12) de la plaque de base (10) , avec des bords chanfreinés (32, 34) qui s'étendent depuis le fond (36) du creux (30) jusqu'à la surface (38) de la plaque de recouvrement (26) qui est disposée sur la surface (20) de la plaque de base (10).

3. Boîtier de protection selon l'une des revendications 1 ou 2, caractérisé en ce que les bords chanfreinés (14, 16, 32, 34) du ou des creux (12, 30) constituent une glissière pour le bord d'un disque compact.

4. Boîtier de protection selon l'un quelconque des revendications 1 à 3, caractérisé en ce que la plaque de base (10) est constituée d'un matériau opaque et la plaque de recouvrement (26) est constituée d'un matériau transparent.

5. Boîtier de protection selon l'une quelconque des revendications 1 à 4, caractérisé en ce que la plaque de base (10) et la plaque de recouvrement (26) sont réalisées en matière plastique.

6. Boîtier de protection selon l'une quelconque des revendications 1 à 5, caractérisé en ce que la plaque de base (10) et la plaque de recouvrement (26) sont collées ou soudées ensemble au niveau de leurs surfaces tournées l'une vers l'autre (20, 38).

7. Boîtier de protection selon l'une quelconque des revendications 1 à 6, caractérisé en ce que l'angle d'inclinaison α des bords chanfreinés (14, 16, 32, 34) est égal à 45° environ.

8. Boîtier de protection selon l'une quelconque des revendications 1 à 7, caractérisé en ce que les bords chanfreinés (14, 16, 32, 34) s'étendent sur toute la périphérie du ou des creux (12, 30) en forme de U.

9. Boîtier de protection selon l'une quelconque des revendications 1 à 8, caractérisé en ce que les bords chanfreinés (14, 16, 32, 34) s'étendent seulement le long des côtés (40) du ou des creux (12, 30) en forme de U.

10. Boîtier de protection selon l'une quelconque des revendications 1 à 9, caractérisé en ce que les bords chanfreinés (14, 16, 32, 34) s'étendent seulement sur des fractions des côtés (40) et du talon (42) du ou des creux en forme de U (12, 30).

11. Boîtier selon l'une quelconque des revendications 1 à 10, caractérisé en ce que le rayon du talon (32) du ou des creux en forme de U (12, 30) correspond environ au rayon d'un disque compact.
